# EUROPEAN PATENT SPECIFICATION

(11) **EP 1 481 432 B1**
(45) Date of publication and mention of the grant of the patent: **16.05.2007**
(21) Application number: 03729277.8
(22) Date of filing: 06.01.2003
(51) Int. Cl.: H01M 4/90, H01M 4/86, H01M 8/10, C25B 11/04, C25B 9/10

(54) **ELECTROCATALYST INK**
ELEKTROKATALYTISCHER FARBSTOFF
ENCRE ELECTROCATALYTIQUE

(30) Priority: 08.01.2002 GB 0200253
(43) Date of publication of application: 01.12.2004
(73) Proprietor: JOHNSON MATTHEY PUBLIC LIMITED COMPANY, London SW1Y 5BQ (GB)
(72) Inventor: BUCHE, Silvain, Reading RG4 6QT (GB); HOGARTH, Karen, Leanne, Reading RG4 9RU (GB); GASCOYNE, John, Malcolm, High Wycombe HP14 4BB (GB); RALPH, Thomas, Robertson, Chippenham Wiltshire SN15 5AX (GB)
(74) Representative: Wishart, Ian Carmichael
(86) International application number: PCT/GB2003/000013
(87) International publication number: WO 2003/058735

(56) References cited:
- EP-A- 1 117 142
- WO-A-01/15249
- WO-A-02/05365
- WO-A-02/05375
- US-A- 6 156 449
- SHUKLA A K ET AL: "A liquid-feed solid polymer electrolyte direct methanol fuel cell operating at near-ambient conditions" JOURNAL OF POWER SOURCES, ELSEVIER SEQUOIA S.A. LAUSANNE, CH, vol. 76, no. 1, 1 November 1998 (1998-11-01), pages 54-59, XP004142870 ISSN: 0378-7753

## Description

The present invention relates to an improved electrocatalyst ink comprising particulate graphite and a process for the preparation thereof. Furthermore, the invention relates to the use of the improved electrocatalyst ink, and in particular to its use in the preparation of higher performance catalyst layer structures for application in fuel cells and other electrochemical devices.

Electrochemical cells invariably comprise at their fundamental level a solid or liquid electrolyte and two electrodes, the anode and cathode, at which the desired electrochemical reactions take place. A fuel cell is an energy conversion device that efficiently converts the stored chemical energy of its fuel into electrical energy by combining either hydrogen, stored as a gas, or methanol stored as a liquid or gas, with oxygen to generate electrical power. The hydrogen or methanol is oxidised at the anode and the oxygen is reduced at the cathode of the electrochemical cell. In these cells gaseous reactants and/or products have to be diffused into and/or out of the cell electrode structures. The electrodes therefore are specifically designed to be porous to gas diffusion in order to optimise the contact between the reactants and the reaction sites in the electrode to maximise the reaction rate. The electrolyte which has to be in contact with both electrodes to maintain electrical contact in the fuel cell may be acidic or alkaline, liquid or solid, in nature. The proton exchange membrane fuel cell (PEMFC) is the most likely type of fuel cell to find wide application as a more efficient and lower emission power generation technology in a range of markets including stationary and portable power devices and as an alternative to the internal combustion engine in transportation. In the PEMFC, whether hydrogen or methanol fuelled, the electrolyte is a solid proton-conducting polymer membrane, commonly based on perfluorosulphonic acid materials.

In the PEMFC the combined laminate structure formed from the membrane and the two electrodes is known as a membrane electrode assembly (MEA). The MEA will typically comprise several layers, but can in general be considered, at its basic level, to have five layers, which are defined principally by their function. On either side of the membrane an anode and cathode electrocatalyst is incorporated to increase the rates of the desired electrode reactions. In contact with the electrocatalyst containing layers, on the opposite face to that in contact with the membrane, are the anode and cathode gas diffusion substrate layers. The anode gas diffusion substrate is designed to be porous and to allow the reactant hydrogen or methanol to enter from the face of the substrate exposed to the reactant fuel supply, and then to diffuse through the thickness of the substrate to the layer which contains the electrocatalyst, usually platinum metal based, to maximise the electrochemical oxidation of hydrogen or methanol. The anode electrocatalyst layer is also designed to comprise some level of the proton-conducting electrolyte in contact with the same electrocatalyst reaction sites. With acidic electrolyte types protons are produced as the product of the reaction occurring at the anode and these can then be efficiently transported from the anode reaction sites through the electrolyte to the cathode layers. The cathode gas diffusion substrate is also designed to be porous and to allow oxygen or air to enter the substrate and diffuse through to the electrocatalyst layer reaction sites. The cathode electrocatalyst combines the protons with oxygen to produce water and is also designed to comprise some level of the proton-conducting electrolyte in contact with the same electrocatalyst reaction sites. Product water then has to diffuse out of the cathode structure. The structure of the cathode has to be designed such that it enables the efficient removal of the product water. If water builds up in the cathode, it becomes more difficult for the reactant oxygen to diffuse to the reaction sites, and thus the performance of the fuel cell decreases. In the case of methanol fuelled PEMFCs, additional water is present due to the water contained in the methanol, which can be transported through the membrane from the anode to the cathode side. The increased quantity of water at the cathode requires removal. However, it is also the case with proton-conducting membrane electrolytes, that if too much water is removed from the cathode structure, the membrane can dry out and the performance of the fuel cell also decreases.

The complete MEA can be constructed by several methods. The electrocatalyst layers can be bonded to one surface of the gas diffusion substrates to form what is known as a gas diffusion electrode. The MEA is then formed by combining two gas diffusion electrodes with the solid proton-conducting membrane. Alternatively, the MEA may be formed from two porous gas diffusion substrates and a solid proton-conducting polymer membrane catalysed on both sides (also referred to as a catalyst coated membrane or CCM); or indeed the MEA may be formed from one gas diffusion electrode and one gas diffusion substrate and a solid proton-conducting polymer catalysed on the side facing the gas diffusion substrate.

The materials typically used in the fabrication of the gas diffusion substrate layers of an MEA comprise high density materials such as rigid carbon fibre paper (e.g. Toray TGP-H-60 or TGP-H-90 from Toray Industries, Japan) or woven carbon cloths, such as Zoltek PWB-3 (Zoltek Corporation, 3101 McKelvey Road, St. Louis, Missouri 63044, USA). Substrates such as these are usually modified with a particulate material either embedded within the fibre network or coated on to the large planar surfaces, or a combination of both. Typically these particulate materials comprise a carbon black and polymer mix. The particulate carbon black material is, for example, an oil furnace black such as Vulcan XC72R (from Cabot Chemicals, Billerica, Ma, USA) or an acetylene black such as Shawinigan (from Chevron Chemicals, Houston, Texas, USA). The polymer most frequently used is polytetrafluoroethylene (PTFE). The coating, or embedding, is carried out in order to improve the water management properties, improve gas diffusion characteristics, to provide a continuous surface on which to apply the catalyst layer and to improve the electrical conductivity. More recently, electrode structures based on gas diffusion substrates comprising a non-woven network of carbon fibres (carbon fibre structures such as Optimat 203, from Technical Fibre Products, Kendal, Cumbria, UK) with a particulate material embedded within the fibre network as disclosed in EP 0 791 974 have shown comparable performances to structures based on carbon fibre paper or cloth.

The electrocatalyst materials for the anode and cathode structures typically comprise precious metals, in particular platinum, as these have been found to be the most efficient and stable electrocatalysts for all low-temperature fuel cells such as the PEMFC. Platinum is employed either on its own as the only electrocatalyst metal or in combination with other precious metals or base metals. The platinum based electrocatalyst is provided as very small particles (~2-5nm) of high surface area, which are usually distributed on and supported by larger macroscopic conducting carbon particles to provide a desired catalyst loading. Conducting carbons are the preferred materials to support the catalyst. Particulate carbon black materials typically employed include Vulcan XC72R and Shawinigan. It is also possible that the platinum based electrocatalyst may not incorporate a support, and in this case it is referred to as an unsupported Pt electrocatalyst.

Each MEA in the PEMFC is sandwiched between electrically conducting flow field plates which are conventionally based on carbon and contain channels that feed the MEA with the reactants and through which the products are removed. Since each MEA is typically required to deliver at least 500mAcm⁻² at 0.6 -0.7 V, usually between 10 to 300 such MEAs are located between flow field plates to form stacks. These stacks are combined electrically in series or parallel to give the desired power output for a given application.

Realising the high current densities that are potentially available requires that all the components of the MEA structure are able to perform at their maximum practical level. Thus, within the electrocatalyst layer, the proportion of the catalyst surface in contact with the proton-conducting polymer electrolyte needs to be as high as practically possible, whilst still ensuring access to the catalyst surface for the reactant gas or liquid. The level of hydration of the proton-conducting polymer, within the electrocatalyst layer, must also be maintained at the correct level to ensure that there is sufficient water available for the proton transport processes. The electronic conductivity of the electrocatalyst layer, in both the x-y and z directions, is also very important for maximising the cell potential and needs to be maintained at the highest level possible. The dichotomy between the need to maximise the catalyst dispersion and therefore maximise the contact between the catalyst and the electronically-insulating proton-conducting polymer, and the need to maximise electron conduction both between the catalyst particles and between the catalyst layer and the gas diffusion substrate is one that has not been readily resolved.

It is the aim of the present invention to provide an improved electrocatalyst material (hereinafter referred to as "electrocatalyst ink") that is used to provide an electrocatalytic layer with improved electronic conductivity in both the x-y and z directions, when incorporated as part of an MEA. Accordingly, the present invention provides an electrocatalyst ink comprising one or more electrocatalyst metals and one or more proton-conducting polymers, characterised in that the electrocatalyst ink further comprises particulate graphite which is present at a loading of 1 to 40 weight % with respect to the weight of the electrocatalyst.

The loading of is measured with respect to the weight of the electrocatalyst wherein the term "electrocatalyst" includes the one or more electrocatalyst metals and any support materials that support the electrocatalyst metal particles.

The present inventors have discovered that an electrocatalyst ink comprising electrocatalyst material and proton-conducting polymer, and further comprising particulate graphite at a loading of 1-40wt% can provide an electrocatalytic layer with improved electronic conductivity. The graphite can be added to the electrocatalyst ink without compromising the contact between the electrocatalyst and the proton-conducting polymer in the electrocatalytic layer. Furthermore, the addition of the graphite does not significantly affect the level of hydration in the catalyst layer.

The amount of particulate graphite in the electrocatalyst ink is 1 to 40 weight % with respect to the weight of the electrocatalyst, preferably 2-25wt%, more preferably 2-15wt%. The amount of graphite is important because high levels of graphite (eg over 40wt%) may compromise the functioning of the catalyst layer, reducing the interaction between the catalyst and the proton conducting polymer. Additionally, high levels of graphite may affect gas diffusion and the level of hydration within the electrocatalyst layer.

The term "ink" as used to describe the present invention implies a material that is dispersed in a vehicle carrier and that can be applied to a substrate by a variety of methods, such as filtration, vacuum deposition, spray deposition, casting, extrusion, rolling or printing such that the final ink formulation is capable of being used in a high volume production process for the deposition of an electrocatalytic layer. The ink of the present invention can be applied to substrates such as gas diffusion substrates, membranes, or decal blanks, providing an electrocatalytic layer in a simple operation.

The term "electrocatalyst" will be well understood by a person skilled in the art to mean a catalyst that when incorporated into a gas diffusion electrode facilitates an electrochemical reaction. Electrocatalyst metals for use in the present invention may be selected from
(i) the platinum group metals (i.e. platinum, palladium, rhodium, ruthenium, iridium and osmium),
(ii) gold or silver,
(iii) a base metal or base metal oxide,
or an alloy or mixture comprising one or more of these metals. The preferred electrocatalyst metal for use in the present invention is platinum. The electrocatalyst metal may be unsupported, or supported on a conductive substrate, and preferably is supported on, for example a high surface area particulate carbon. The electrocatalysts typically used in PEM fuel cells are either supported metal catalysts, wherein the metal particles are dispersed over the surface of a carbon black, or unsupported finely divided metal blacks. In the case of the supported catalysts, the individual particles or nodules of carbon are between 10 and 100nm in diameter and the typical aggregate, formed by the fusion of the individual particles has the largest dimension, in at least one direction, in the range 100-500nm (0.1-0.5µm) (T. J. Fabish and D. E. Schleifer, Carbon, Vol. No.1 19 -38, 1984). The metal particles supported on the carbon are typically in the range 2-5nm. The unsupported metal blacks typically have individual particles with dimensions in the order of 1-10nm, with aggregates of such particles forming clusters in the range !00-5000nm (0.1-5µm).

Graphite is an anisotropic form of carbon, with a structure composed of infinite layers of carbon atoms, arranged in the form of hexagons, and lying in planes. The stacking arrangement of the planes is ABAB, with atoms in alternate planes aligning with each other. This layer structure is one of the most anisotropic known, and is a direct result of the layered structure with extremely strong carbon bonds in the basal plane and weak bonds between planes. These characteristics are reflected in the bulk, physical properties of the material, as for example the electrical resistivity, which, in the basal plane is over two orders of magnitude less than across the basal plane.

There are two main sources of commercially available graphite, the first of which is natural graphite, a crystalline mineral form of graphite occurring in many parts of the world. Typically such materials contain some additional mineral elements, and reflect the layered structure in their physical appearance, being in the form of flakes, having a small z dimension with respect to the x and y directions. The second is manufactured graphite, which is a bonded, granular, carbon body whose matrix has been subjected to a temperature typically in excess of 2400°C and whose matrix is stable below that temperature (Standard Definitions of Terms Relating to Manufacturing Carbon and Graphite, American Society for Testing and Materials). Within these materials the atomic structure remains laminar with retention of the typical physical properties, such as electrical conductivity, however the bulk physical structure can be more varied, ranging from flake-like materials to structures where the x, y and z dimensions are similar.

The graphite used in the present invention is particulate graphite, e.g. flake graphite or spherical graphite. The longest dimension of the graphite particles is suitably in the range 0.5-50µm, preferably in the range 1-20µm. Larger graphite particles are not preferred because electrocatalytic layers are typically from 5 to 40µm thick and larger particles could protrude above the surface of the layer. Additionally, larger graphite particles could not be used in certain ink application processes such as printing.

The electrical resistivity of the graphite is suitably below 0.05Ωcm. This is lower than the resistivity of other particulate carbons that are commonly used in catalyst inks as catalyst supports.

The ink comprises one or more solvents, which may be organic such as alcohols, esters, lower amides (eg dimethyl formamide and dimethyl acetamide) and dimethyl sulphoxide, but may also be water. Preferably, at least 75wt% of the solvent is water; more preferably, at least 90% of the solvent is water.

Suitably the solids content of the electrocatalyst ink is between 5 and 50 weight %, preferably between 10 and 40 weight %, based on the weight of the ink.

An MEA may comprise graphite in several different components, e.g. the electrocatalyst metal may be supported on particulate graphite. In the present invention, particulate graphite is present as an additional component in the electrocatalyst ink. Suitably, if the electrocatalyst metal is supported, at least 75% of the support material is not graphite. Preferably, if the electrocatalyst metal is supported, the support material is not graphite. Graphite is usually not a suitable support material because the surface area of the particles is low and only relatively low loadings of metal can be deposited onto the graphite. Preferably the BET surface area of any support material is greater than 40m²/g.

The proton-conducting polymers suitable for use in the present invention may include, but are not limited to:
1) Polymers which have structures with a substantially fluorinated carbon chain optionally having attached to it side chains that are substantially fluorinated. These polymers contain sulphonic acid groups or derivatives of sulphonic acid groups, carboxylic acid groups or derivatives of carboxylic acid groups, phosphonic acid groups or derivatives of phosphonic acid groups and/or mixtures of these groups. Perfluorinated polymers include Nafion^{®}, Flemion^{®} and Aciplex^{®} commercially available from E. I. DuPont de Nemours (U.S. Patents 3,282,875; 4,329,435; 4,330,654; 4,358,545; 4,417,969; 4,610,762; 4,433,082 and 5,094,995), Asahi Glass KK and Asahi Kasei respectively. Other polymers include those covered in U.S. Patent 5,595,676 (Imperial Chemical Industries plc) and U.S. Patent 4,940,525 (Dow Chemical Co.)
2) Perfluorinated or partially fluorinated polymers containing aromatic rings such as those described in WO 95/08581, WO 95/08581 and WO 97/25369 (Ballard Power Systems) which have been functionalised with SO₃H, PO₂H₂, PO₃H₂, CH₂PO₃H₂, COOH, OS0₃H, OPO₂H₂, OPO₃H₂. Also included are radiation or chemically grafted perfluorinated polymers, in which a perfluorinated carbon chain, for example, PTFE, fluorinated ethylenepropylene (FEP), tetrafluoroethylene-ethylene (ETFE) copolymers, tetrafluoroethylene-perfluoroalkoxy (PFA) copolymers, poly(vinyl fluoride) (PVF) and poly(vinylidene fluoride) (PVDF) is activated by radiation or chemical initiation in the presence of a monomer, such as styrene, which can be functionalised to contain an ion exchange group.
3) Fluorinated polymers such as those disclosed in EP 0 331 321 and EP 0 345 964 (Imperial Chemical Industries plc) containing a polymeric chain with pendant saturated cyclic groups and at least one ion exchange group which is linked to the polymeric chain through the cyclic group.
4) Aromatic polymers such as those disclosed in EP 0 574 791 and US Patent 5,438,082 (Hoechst AG) for example sulphonated polyaryletherketone. Also aromatic polymers such as polyether sulphones which can be chemically grafted with a polymer with ion exchange functionality such as those disclosed in WO 94/16002 (Allied Signal Inc.).
5) Nonfluorinated polymers include those disclosed in U.S. Patent 5,468,574 (Dais Corporation) for example hydrocarbons such as styrene-(ethylene-butylene)-styrene, styrene-(ethylene-propylene)-styrene and acrylonitrile-butadiene-styrene co- and terpolymers where the styrene components are functionalised with sulphonate and/or phosphonic groups.
6) Nitrogen containing polymers including those disclosed in U.S. Patent 5,599,639 (Hoechst Celanese Corporation), for example, polybenzimidazole alkyl sulphonic acid and polybenzimidazole alkyl or aryl phosphonate.

Suitably the weight ratio of the electrocatalyst (the one or more electrocatalyst metals plus any catalyst support) to the proton-conducting polymer is between 1:1 and 10:1.

A second aspect of the invention provides a process for preparing an electrocatalyst ink of the invention, said process comprising mixing one or more electrocatalyst materials with the one or more proton-conducting polymers and the particulate graphite in a liquid medium, which may be aqueous or organic.

A third aspect of the invention provides a process for preparing an electrocatalytic layer using an electrocatalyst ink of the invention, said process comprising applying the electrocatalyst ink to a substrate. The substrate may be a gas diffusion substrate, eg a carbon paper, a polymer electrolyte membrane, or a decal blank, eg a Teflon blank.

The present invention also provides a gas diffusion electrode, which may be an anode or a cathode, comprising a gas diffusion substrate and an electrocatalytic layer prepared using the electrocatalyst ink according to the present invention. The electrode is prepared by applying the electrocatalyst ink to the gas diffusion substrate (eg of carbon fibre paper) by any method known in the art and including filtration, vacuum deposition, spray deposition, casting, extrusion, rolling or printing.

The present invention also provides a catalyst coated membrane comprising a solid polymer membrane and an electrocatalytic layer prepared using the electrocatalyst ink of the invention. The catalyst coated membrane is prepared by applying the electrocatalyst ink to one or both sides of the membrane by any method known in the art and including filtration, vacuum deposition, spray deposition, casting, rolling or printing. Still further aspects of the invention provide i) a membrane electrode assembly comprising an electrocatalytic layer prepared using the electrocatalyst ink of the invention, and ii) a fuel cell comprising an electrocatalytic layer prepared using the electrocatalytic ink of the present invention.

The invention will now be described by way of example only which is not intended to be limiting thereof.

### COMPARATIVE EXAMPLE 1

A catalyst ink for use as a comparative electrocatalyst layer was provided by dispersing 100g of 40wt% platinum on carbon black (Johnson Matthey HiSpec^{™} 4000) in 520g of a 13wt% solution of Nafion^{™} dispersed in water according to methods described in EP 0 731 520. The particulate catalyst was dispersed using a high-shear mixer (Silverson L4R) to produce a smooth ink

### EXAMPLE 1

An electrocatalyst ink was prepared as for Comparative Example 1 by dispersing 40g of 40wt% platinum on carbon black (Johnson Matthey HiSpec^{™} 4000) and 4.5g of a flake graphite type T44 (supplied by Timcal Ltd., CH-5643 Sins, Switzerland) in 310g of demineralised water and 122.1 g of a 23.34wt% solution of Nafion^{™} dispersed in water, to form a smooth ink.

### EXAMPLE 2

An electrocatalyst ink was prepared as for Comparative Example 1 by dispersing 45g of 40wt% platinum on carbon black (Johnson Matthey HiSpec^{™} 4000) and 5g of a spherical flake graphite type SFG 15 (supplied by Timcal Ltd., CH-5643 Sins, Switzerland) in 310g of demineralised water and 122.1 g of a 23.34wt% solution of Nafion^{™} dispersed in water, to form a smooth ink.

### RESISTANCE MEASUREMENT

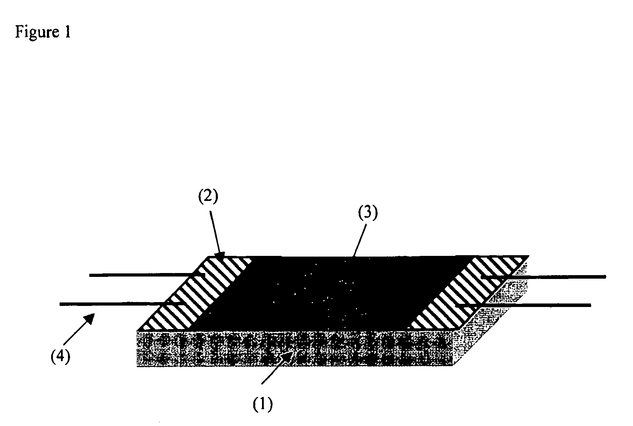

The apparatus used to measure resistance is shown in figure 1. A number of copper plated fibre-glass printed circuit boards, of dimensions 10cm x 2.5cm, were prepared with the central section (7.5cm) of the board having the copper coating removed (1). The samples of ink were then screen printed onto individual boards such that the printed layer (3) extended over the copper end strips (2) by 6mm. The printed layers were dried at ambient temperature. Electrical connections (4) were attached to both end strips (2). A Hewlett Packard 4263A LCR (inductance/capacitance/resistance) meter was then used to measure the in-plane resistance of the printed catalyst layer.

Because the humidity of the environment can affect the Nafion polymer, a sealed environmental chamber was used for all of the measurements. For the dry measurements the humidity level was controlled to 18-20% and for the wet measurements, 94-96%. The results are summarised in Table 1.

**Table 1 In Plane Specific Resistivity Values**

| | | Dry | | Wet | |
|---|---|---|---|---|---|
| | Thickness | Resistance | Resistivity | Resistance | Resistivity |
| | (cm) | (KΩ) | (Ωcm) | (KΩ) | (Ωcm) |
| Comparative Example 1 | 0.001 | 3.68 | 1.23 | 13.84 | 4.61 |
| Example 1 | 0.001 | 1.154 | 0.39 | 4.88 | 1.63 |
| Example 2 | 0.001 | 1.71 | 0.57 | 6.79 | 2.26 |

The specific resistivity (ρ) was obtained by R = ρ x length/cross sectional area, where R is the measured resistance in ohms. The in-plane measurements were fairly reproducible both for the 'dry' measurements and the 'wet' measurements. It was observed that in all cases the 'dry' measurements were significantly lower than the 'wet' measurements. However the standard cathode ink (Comparative Example 1) has, in all cases, a significantly higher resistivity than those containing the additional graphite. The trends between the two sets of results 'dry' and 'wet' are the same.

## Claims

1. An electrocatalyst ink comprising one or more electrocatalyst metals and one or more proton-conducting polymers, **characterised in that** the electrocatalyst ink further comprises particulate graphite which is present at a loading of 1 to 40 weight % with respect to the weight of the electrocatalyst.

2. An electrocatalyst ink according to claim 1, wherein the particulate graphite is present at a loading of 2 to 25 weight % with respect to the weight of the electrocatalyst.

3. An electrocatalyst ink according to claim 1 or claim 2, wherein the electrocatalyst metal is platinum.

4. An electrocatalyst ink according to any preceding claim, wherein the electrocatalyst is either a supported metal catalyst or an unsupported finely divided metal black.

5. An electrocatalyst ink according to claim 4, wherein the electrocatalyst metal is supported on a high surface area particulate carbon.

6. An electrocatalyst ink according to any preceding claim, wherein at least 75 weight % of the solvent is water.

7. An electrocatalyst ink according to any preceding claim, wherein the solids content of the electrocatalyst ink is between 5 and 50 weight %.

8. An electrocatalyst ink according to any preceding claim, wherein the weight ratio of the electrocatalyst: proton-conducting polymer is between 1:1 and 10:1.

9. A process for preparing an electrocatalyst ink according to any one of claims 1 to 8, said process comprising mixing one or more electrocatalyst materials with the one or more proton-conducting polymers and the particulate graphite in a liquid medium, which may be aqueous or organic.

10. A process for preparing an electrocatalytic layer using an electrocatalyst ink according to any one of claims 1-8, said process comprising applying the electrocatalyst ink to a substrate.

11. A gas diffusion electrode comprising a gas diffusion substrate and an electrocatalytic layer prepared using an electrocatalyst ink according to any one of claims 1 to 8.

12. A catalyst coated membrane comprising a solid polymer membrane and an electrocatalytic layer prepared using an electrocatalyst ink according to any one of claims 1 to 8.

13. A membrane electrode assembly comprising an electrocatalytic layer prepared using an electrocatalyst ink according to any one of claims 1 to 8.

14. A fuel cell comprising an electrocatalytic layer prepared using an electrocatalyst ink according to any one of claims 1 to 8.

## Patentansprüche

1. Elektrokatalysatortinte, umfassend ein oder mehrere Elektrokatalysatormetalle und ein oder mehrere Proton leitende Polymere, **dadurch gekennzeichnet, dass** die Elektrokatalysatortinte ferner partikulären Graphit umfasst, der in einem Anteil von 1 bis 40 Gew.-% in Bezug auf das Gewicht des Elektrokatalysators vorliegt.

2. Elektrokatalysatortinte nach Anspruch 1, wobei der partikuläre Graphit in einem Anteil von 2 bis 25 Gew.% in Bezug auf das Gewicht des Elektrokatalysators vorliegt.

3. Elektrokatalysatortinte nach Anspruch 1 oder Anspruch 2, wobei das Elektrokatalysatormetall für Platin steht.

4. Elektrokatalysatortinte nach einem beliebigen vorstehenden Anspruch, wobei der Elektrokatalysator entweder für einen geträgerten Metallkatalysator oder ein nicht geträgertes fein verteiltes Metallschwarz steht.

5. Elektrokatalysatortinte nach Anspruch 4, wobei das Elektrokatalysatormetall auf einem partikulären Kohlenstoff großer Oberfläche geträgert ist.

6. Elektrokatalysatortinte nach einem beliebigen vorstehenden Anspruch, wobei mindestens 75 Gew.-% des Lösemittels für Wasser steht.

7. Elektrokatalysatortinte nach einem beliebigen vorstehenden Anspruch, wobei der Feststoffgehalt der Elektrokatalysatortinte zwischen 5 und 50 Gew.-% liegt.

8. Elektrokatalysatortinte nach einem beliebigen vorstehenden Anspruch, wobei das Gewichtsverhältnis des Elektrokatalysators: Proton leitendem Polymer zwischen 1:1 und 10:1 beträgt.

9. Verfahren zur Herstellung einer Elektrokatalysatortinte nach einem beliebigen der Ansprüche 1 bis 8, wobei das Verfahren umfasst ein Mischen eines oder mehrerer Elektrokatalysatormaterialien mit ein oder mehreren Proton leitenden Polymeren und dem partikulären Graphit in einem flüssigen Medium, das wässrig oder organisch sein kann.

10. Verfahren zur Herstellung einer Elektrokatalysatorschicht unter Verwendung einer Elektrokatalysatortinte nach einem beliebigen der Ansprüche 1 bis 8, wobei das Verfahren umfasst ein Aufbringen der Elektrokatalysatortinte auf ein Substrat.

11. Gasdiffusionselektrode, umfassend ein Gasdiffusionssubstrat und eine Elektrokatalysatorschicht, die hergestellt ist unter Verwendung einer Elektrokatalysatortinte nach einem beliebigen der Ansprüche 1 bis 8.

12. Mit Katalysator beschichtete Membran, umfassend eine feste Polymermembran und eine elektrokatalytische Schicht, die hergestellt ist unter Verwendung einer Elektrokatalysatorfinte nach einem beliebigen der Ansprüche 1 bis 8.

13. Membranelektrodenanordnung, umfassend eine elektrokatalytische Schicht, die hergestellt ist unter Verwendung einer Elektrokatalysatortinte nach einem beliebigen der Ansprüche 1 bis 8.

14. Brennstoffzelle, umfassend eine elektrokatalytische Schicht, die hergestellt ist unter Verwendung einer Elektrokatalysatortinte nach einem beliebigen der Ansprüche 1 bis 8.

## Revendications

1. Encre électrocatalytique comprenant un ou plusieurs métaux électrocatalytiques et un ou plusieurs polymères conducteurs de protons, ladite encre électrocatalytique étant **caractérisée en ce qu'**elle comprend en outre du graphite en particules qui est présent à une charge de 1 à 40 % en poids par rapport au poids de l'électrocatalyseur.

2. Encre électrocatalytique suivant la revendication 1, dans laquelle le graphite en particules est présent à une charge de 2 à 25 % en poids par rapport au poids de l'électrocatalyseur.

3. Encre électrocatalytique suivant la revendication 1 ou la revendication 2, dans laquelle le métal électrocatalytique est le platine.

4. Encre électrocatalytique suivant l'une quelconque des revendications précédentes, dans laquelle l'électrocatalyseur est un catalyseur métallique sur un support ou un noir métallique finement divisé non fixé sur un support.

5. Encre électrocatalytique suivant la revendication 4, dans laquelle le métal électrocatalytique est présent sur un support consistant en un carbone en particules à grande surface spécifique.

6. Encre électrocatalytique suivant l'une quelconque des revendications précédentes, dans laquelle au moins 75 % en poids du solvant sont constitués d'eau.

7. Encre électrocatalytique suivant l'une quelconque des revendications précédentes, dans laquelle la teneur en matières solides de l'encre électrocatalytique est comprise entre 5 et 50 % en poids.

8. Encre électrocatalytique suivant l'une quelconque des revendications précédentes, dans laquelle le rapport pondéral électracatalyseur:polymère conducteur de protons est compris entre 1:1 et 10:1.

9. Procédé pour la préparation d'une encre électrocatalytique suivant l'une quelconque des revendications 1 à 8, ledit procédé comprenant l'étape consistant à mélanger une ou plusieurs matières électrocatalytiques à un ou plusieurs polymères conduisant les protons et au graphite en particules dans un milieu liquide, qui peut être aqueux ou organique.

10. Procédé pour la préparation d'une couche électrocatalytique en utilisant une encre électrocatalytique suivant l'une quelconque des revendications 1 à 8, ledit procédé comprenant l'application de l'encre électrocatalytique à un substrat.

11. Electrode de diffusion de gaz, comprenant un substrat de diffusion de gaz et une couche électrocatalytique préparée en utilisant une encre électrocatalytique suivant l'une quelconque des revendications 1 à 8.

12. Membrane revêtue d'un catalyseur, comprenant une membrane polymère solide et une couche électrocatalytique préparée en utilisant une encre électrocatalytique suivant l'une quelconque des revendications 1 à 8.

13. Assemblage membrane-électrode, comprenant une couche électrocatalytique préparée en utilisant une encre électrocatalytique suivant l'une quelconque des revendications 1 à 8.

14. Pile à combustible, comprenant une couche électrocatalytique préparée en utilisant une encre électrocatalytique suivant l'une quelconque des revendications 1 à 8.
